# EUROPEAN PATENT APPLICATION

(11) **EP 4 092 222 A1**
(43) Date of publication of application: **23.11.2022**
(21) Application number: 20914584.6
(22) Date of filing: 30.06.2020
(51) Int. Cl.: E04H 1/00

(54) **REGIONAL BUILDING GROUP STRUCTURE**

(30) Priority: 15.01.2020 JP 2020004075
(71) Applicant: Kamei, Masamichi, Tokyo 153-0062 (JP)
(72) Inventor: Kamei, Masamichi, Tokyo 153-0062 (JP)
(74) Representative: TBK
(86) International application number: PCT/JP2020/025684
(87) International publication number: WO 2021/145011

(57) **Abstract**

Provided is a regional building group structure that improves overall regional convenience and economics while also imparting a cityscape scenery that has warmth based on specific themes in past human creations including urban architecture, art and thought. In the present invention, three or more characterized buildings 1 that share a specific theme are arranged in a region. Each of the characterized buildings 1 is provided with lower floors 2 having unity in basic design and structural form pertaining to appearance and decoration and upper floors 3 located there-above. The lower floors 2 of the characterized buildings 1 arranged in one region are also imparted with unity in the basic design and structural form pertaining to appearance and decoration. The upper floors 3 thereof have unity in structural form and basic design so as achieve a simple appearance with emphasis on functionality and durability. The appearance of the lower floors 2 will be captured in the ordinary line of sight of people walking down the street, thereby allowing the people to relish the experience of living in a fascinating and highly artistic city.

## Description

### TECHNICAL FIELD

This invention relates to a regional building group structure in which a plurality of characterized buildings that share a specific theme are arranged in a region.

In regards to the aspect of an appearance, lower floors of the characterized buildings have unity in the basic design and structural form so as to achieve a classic or traditional appearance with emphasis on artistic and decorative qualities, while upper floors thereof have unity in the basic design and structural form so as to achieve a simply contemporary or neo-futuristic appearance with emphasis on strength and durability, for instance.

### BACKGROUND ARTS

In city regions where the population is being concentrated, there are many high- and medium-rise buildings lining on both sides of the street, and people are living there in a modern cityscape. However, the scenery of the rows of old-fashioned buildings with a tasteful appearance is apt to be disappeared, resulting in causing the change of a cityscape into dry-as-dust scenery.

Of course, among the high- and medium-rise buildings, there also exist some amazing buildings which have achieved, at a considerable cost of construction, a neo-futuristic appearance which can be a landmark, in which case, however, these buildings involve difficulty in terms of cost with consideration of the overall region and besides, can be supposed to lead to creation of a disproportionate cityscape which is lack of unity.

In relation to a city structure, there are some inventions as follows. For instance, as one city structure in which city functions indispensable to new city development are constructed altogether under the ground, a patent document 1 below discloses a city structure in which arterial structures required for the city functions such as driveways, railways or like traffic networks, information networks, energy supply lines and energy discharge lines are constructed altogether under the ground, while the ground surface of the underground arterial structures constitutes a walkway.

A patent document 2 below discloses a metropolitan structure in which, with a focus on an energy center, a plurality of cities respectively made up of super skyscrapers are arranged around the energy center so as to be interconnected together through an underground city tunnel for mutual distribution of energy and information therebetween, thereby providing energy saving based on the safety, and eliminating pollutions by enlargement of a ground surface area such as forest areas, meadow areas and cultivated field areas, resulting in achievement of an improved residential environment.

As one city structure system with which urban flooding is suppressed, a patent document 3 below discloses a city structure system in which water retentive pavement is provided in a ground surface covered area which is an area of at least 4% of a city area where not only a ground surface coverage rate with asphalt, concrete or the like is at least 60%, but also a paved rate of city facilities such as driveways, sidewalks, parking places and automobile terminals is at least 85%.

A patent document 4 below discloses an urban creation with which a high-rise collective residential city made up of a plurality of high-rise residences is disposed with a park that is surrounded by the high-rise residences, wherein the park is provided with a pond habited by fishes, trees bearing fruit and a fallen leaf zone that is to make a leaf mold, thereby allowing an organism habitat space to be created in the park.

A patent document 5 below discloses a structure which is intended to suppress deformation and vibration amplitude of an upper floor part in a base-isolation and damping structure in which the upper floor part is constructed on a base-isolated lower floor part, wherein the deformation and vibration amplitude of the upper floor part are suppressed in such a way that the rigidity of a lowermost floor in the upper floor part is reduced for easy deformation so as to lead to a longer period of vibrations with the lowermost floor as a damping floor and also to centralization of the deformation.

This patent document 5 also describes one embodiment of the above structure where the lower floor part shall be of rigid-frame structure having a seismic-resistant wall constituted of a steel-framed reinforced concreteconstructed or concrete filling type steel-pipe column, a steel-framed beam and a core shock-resistant wall frame, while the upper floor part shall be of rigid-frame structure having a brace constituted of a steel-framed or concrete filling type steel-pipe column and a steel-framed beam.

In addition to the above, a non-patent document 1 below introduces a new 3rd building completed in September, 2014, in Waseda campus of Waseda University, Shinjuku, Tokyo, Japan, and states that the new 3rd building is composed of a reproduced building part (ranging from the first to the fifth floors) and a high-rise building part, wherein a damping structure is adopted in between the reproduced building part and the high-rise building part. This non-patent document 1 also states that the reproduced building part is designed such that, in a university's history preservation zone with a focus on an Okuma Auditorium being the symbol of the region, a south-side part of the former 3rd building having a history of about 80 years since the completion in 1933 is reproduced in consideration of the continuity with the peripheral buildings, as one building constructed with preservation of scenery of the former 3rd building in mind, thereby allowing the visual scene thereof in the old days to be passed on toward the future generations.

### PRIOR ART DOCUMENTS

### PATENT DOCUMENTS

Patent document 1: Japanese Unexamined Patent Application Publication No. Hei09-302689
Patent document 2: Japanese Unexamined Patent Application Publication No. Hei10-246005
Patent document 3: Japanese Unexamined Patent Application Publication No. 2004-019298
Patent document 4: Japanese Unexamined Patent Application Publication No. Hei11- 081715
Patent document 5: Japanese Unexamined Patent Application Publication No. 2017-101516

### NON-PATENT DOCUMENT

Non-patent document 1: Hiroyuki ENOMOTO and Koetsu NAKAMURA, "Interview 90 on Base-isolation and Damping Building, [New 3rd Building of Waseda Campus] of Waseda University", pp. 20 to 23, [online] Japan Society of Seismic Isolation, May, 2015, [Searched on June 22, 2020] Internet < URL: https: // www.jssi.or.jp/bussiness/shuppan_detail/kaishiback/88homonk i-waseda3.pdf>

### SUMMARY OF THE INVENTION

### PROBLEMS TO BE SOLVED BY THE INVENTION

The inventions disclosed in the above patent documents 1 to 3 are intended to provide a neo-futuristic city structure which is designed mainly from the view point of convenience, while being in harmony with a natural environment, whereas the subject matter of these inventions is far away from the longstanding traditions having been fostered through a human history and/or from a tastefully nostalgic and old-fashioned cityscape that is artistic.

The invention disclosed in the above patent document 4 is mainly intended to create the organism habitat space in such a way that the high-rise collective residential city made up of the plurality of high-rise residences is disposed with the park provided with the pond habited by fishes, the trees bearing the fruits and the fallen leaf zone that is to make the leaf mold, whereas the aspects of views and/or economics of the high-rise residence itself are not taken into consideration in particular.

The invention disclosed in the above patent document 5 is intended to improve overall building seismic-resistance in relation to the building in which the upper floor part is constructed on the lower floor part, whereas the aspects of views and/or economics of the building itself are not taken into consideration in particular.

The invention described in the non-patent document 1 is such that, when replacement of a long-established building with a high-rise building takes place, the appearance and design of the long-established building before replacement remain left in a part of the high-rise building for the purpose of preservation of the tasteful appearance and atmosphere of the long-established building in consideration of the continuity with the peripheral long-established buildings, in which case, however, the building to be designed is only limited to a single specific building, and it is to be thus understood that no overall regional buildings shall be designed in unity in accordance with a specific theme.

An object of the present invention is to provide a regional building group structure that improves the overall regional convenience and economics, while preserving the scenery and/or atmosphere of a classic or traditional cityscape that is artistic and decorative.

### MEANS FOR SOLVING THE PROBLEMS

The present invention provides a regional building group structure in which three or more characterized buildings that share a specific theme are arranged in a region, the regional building group structure being characterized in that the characterized buildings are individually provided with lower floors having unity in the basic design and structural form pertaining to appearance and decoration and upper floors located above the lower floors, wherein the lower floors of the characterized buildings arranged in one region are also imparted with unity in the basic design and structural form pertaining to appearance and decoration.

The characterized building referred to in the present invention means a building in which the lower floors thereof are given the characterized appearance and decoration in accordance with the specific theme which will be detailed later.

The lower floors stated herein means the floors ranging from the first floor to the prescribed floor to the extent of the fifth floor, for instance, and are assumed to be in the range of floors toward which the eyes of the people walking down the street in the region can be turned most frequently. However, from the view point of the floors sectionalized in structural form into the lower floors and the upper floors, the lower floors may also be partly ranging from the first to the fifth or more floors. Meanwhile, all the buildings constituting the building group may be different in the number of lower floors at each building, without the need of specifying the range of lower floors to be the same.

In case of a building having a basement floor, no appearance of the basement floor is visible because of its location under the ground, in which case, however, the interior of the basement floor may be designed to have unity with the lower floors in the basic design and structural form in accordance with the theme given to the lower floors, or alternatively, the basement floor may also be designed to achieve the interior finishing and/or structural form with emphasis on functionality and durability, like the upper floors.

In regards to the regional building group structure of this type, the lower floors can be designed to have unity in the basic design and structural form so as to achieve a classic or traditional appearance with emphasis on artistic and decorative qualities, for instance, while the upper floors can be designed to have unity in the basic design and structural form so as to achieve a simply contemporary or neo-futuristic appearance with emphasis on functionality and durability.

In this case, the people walking down the street in the region can relish, in the ordinary line of sight thereof, the experience of living in a heart-warming, nostalgic and luxurious city.

To actualize an artistic sense of a building owner or designer at a high cost, a certain kind of materials having been used from ancient times and skills of skilled workers, for instance, may also be utilized to provide the lower floors of highly artistic appearance with a thousand years of human creations and fine arts incorporated thereinto.

Meanwhile, in regards to the upper floors outside the range of the ordinary line of sight of the people, the construction and maintenance/management costs can be reduced by making use of a highly durable material not only for a framework of steel structure but also as exterior finishing material, provided that emphasis be placed on functionality and durability and that the cost be minimized.

Namely, the lower floors enhance the artistic and decorative qualities, while accepting an increase in construction and/or maintenance cost, and meanwhile, the upper floors that are designed to be given the durability of several hundred years, for instance, make it possible to greatly minimize the maintenance cost.

Provided that the lower floors are ranging from the first to the third floors, while the upper floors are ranging from the fourth to the thirtieth floors, for instance, the building is designed such that, when assuming that the ratio of construction or maintenance cost of the lower floors ranging from the first to the third floors to be 100, the ratio of construction or maintenance cost of the upper floors ranging from the fourth to the thirtieth floors will come to be 25, resulting in a reduction in relative cost of the upper floors to one fourth. By so doing, it can be understood that, on the whole as the building, the high cost of the lower floors can be compensated for with the relatively low cost of the upper floors.

It is noted that the building is often regarded as being composed of three constitutional elements, that is, base, shaft and crown, and therefore, the concept of the present invention also includes application of a high level of design to a part of the top floor so as to achieve a beautiful skyline, for instance, within the concept such that a lower floor part be formed into a more enriched part in terms of content, with a voluminous upper floor part finished at a relatively low reasonable cost.

While the number of characterized buildings constituting a single building group shall be three or more, it would be preferable to provide the building group made up of four to ten or more characterized buildings, if possible, in order to achieve the building group having unity in accordance with the specific theme, as single reginal building group.

Examples of the specific theme intended for the lower floors of the characterized building include:
(a) a theme based on an image of a famous city in ancient, modern or contemporary times,
(b) a theme based on an image of a futuristic city, and
(c) a theme based on an image of the contents of literature, fairy tale or folk story,
but are not limited to the above.

The region where there are a large number of characterized buildings constructed in accordance with the specific theme as described the above can be considered as constituting a characterized city, so that the local residents and the visitors from the outside can relish the cityscape and/or atmosphere based on the image of the specific theme.

On the other hand, the upper floors of each characterized building are constructed in the form of a simply high- and medium-rise building with emphasis on cost and/or functionality, so that the characterized city of limited area can be formed with a living space where a large number of residents can live a comfortable life, together with a space for economic activities.

As one building configuration in regards to the structural relation between the lower floors and the upper floors, it may be possible to take such configuration that the upper floors are constructed integrally on the lower floors that are imparted with unity in the basic design and structural form pertaining to appearance and decoration. Meanwhile, the upper floors can be of simple structure with emphasis on cost and/or functionality, as the living space for a large number of residents and the space for economic activities, in which case, the durability and/or damping function of the building are of importance as well.

In this case, it can be considered, for instance, that the lower floors shall be of structure mainly comprising a reinforced concrete structure or a steel-framed reinforced concrete structure with which it is relatively easy to perform designing on the appearance and decoration in various manners, and meanwhile, the upper floors shall be of structure mainly comprising a steel-framed structure with which it is relatively easy to secure the durability as for the high- and medium-rise building.

Further, the lower floors and the upper floors are integrated together at a rigid joint part, or alternatively, may also be of structure in which a base isolation layer is provided between the lower floor part and the upper floor part located there-above to suppress vibrations of the upper floor part at the time of an earthquake.

As another building configuration in regards to the structural relation between the lower floors and the upper floors, it may also be possible to take such configuration that an inside lower floor with its outer periphery enclosed with the lower floors is constructed integrally beneath the upper floor part.

In this case, it can be considered, for instance, that the lower floors shall be of structure mainly comprising a reinforced concrete structure or a steel-framed reinforced concrete structure with which it is relatively easy to perform designing on the appearance and decoration in various manners, and meanwhile, the upper floors and the inside lower floor shall be of structure mainly comprising a steel-framed structure with which it is relatively easy to secure the durability as for the high- and medium-rise building.

Further, provided that the upper floors and the inside lower floor shall be an integral part of a high- and medium-rise building wherein the lower floors are provided so as to enclose the outer periphery thereof, the upper floors integrated with the inside lower floor may also be designed to be structurally separated from the lower floors so as to achieve a relative deformation-acceptable structure such as expansion joint between the inside lower floor and the lower floors, or alternatively, to interpose a vibration control damper therebetween for reducing a seismic building response.

According to the present invention, the regional building group made up of the characterized buildings that share the specific theme as described the above can also be considered as constituting a characterized city, whereby a plurality of dispersedly located city regions, specifically, a plurality of dispersedly located characterized cities can constitute a characterized city group structure given the specific theme different at each characterized city.

A large number of characterized cities respectively constructed in accordance with the different themes are situated in the characterized city group of this type, thereby allowing the residents to live a daily life based on the characterized city according to one's preference and also to visit the other characterized cities respectively given the different themes, for the purpose of sightseeing, for instance.

### EFFECTS OF THE INVENTION

According to the regional building group structure of the present invention, the overall characterized buildings that are constructed in the region and share the specific theme are individually sectionalized, in unity, into the lower floors and the upper floors, wherein the lower floors are imparted with unity in the basic design and structural form so as to achieve the classic or traditional appearance with emphasis on the artistic and decorative qualities in accordance with the specific theme, for instance, thereby allowing the people walking down the street to relish the experience of living in a highly-artistic and fascinating city.

The upper floors are constructed in the form of the simply high- and medium-rise building with emphasis on cost and/or functionality and durability, thereby allowing the characterized city of limited area to be formed with the living space where a large number of residents can live a comfortable life, together with the space for economic activities.

### BRIEF DESCRIPTION OF THE DRAWINGS

[FIG. 1] FIG. 1 is a perspective view showing a regional building group structure with an image of a city in England as the theme of lower floors according to one embodiment of the present invention.
[FIG. 2] FIG. 2 is an elevational view conceptionally showing the regional building group structure according to the present invention.
[FIG. 3] FIG. 3 is an enlarged-scale view of a portion indicated by A in FIG. 2.
[FIG. 4] FIG. 4 is an enlarged-scale view of a portion indicated by B in FIG. 2.
[FIG. 5] FIG. 5 is an enlarged-scale view of a portion indicated by C in FIG. 2.
[FIG. 6] FIG. 6 is a bird's eye view showing the regional building group structure with an image of ancient ruins as the theme of lower floors according to another embodiment of the present invention.
[FIG. 7] FIG. 7 is a bird's eye view showing the regional building group structure with an image of a city in Spain as the theme of lower floors according to a further embodiment of the present invention.
[FIG. 8] FIG. 8 is a bird's eye view showing the regional building group structure with an image of a city on water as the theme of lower floors according to a still further embodiment of the present invention.
[FIG. 9] Fig. 9 is a bird's eye view showing the regional building group structure with an image of a city in Italy as the theme of lower floors according to a yet further embodiment of the present invention.
[FIG. 10] FIG. 10 is a bird's eye view showing the regional building group structure with an image of a city in France as the theme of lower floors according to a yet further embodiment of the present invention.
[FIG. 11] FIG. 11 a bird's eye view conceptionally showing a characterized city group structure made up of a plurality of dispersedly located characterized cities according to the present invention.

### MODE FOR EMBODYING THE INVENTION

Hereinafter will be described one embodiment of a regional building group structure according to the present invention with reference to the attached drawings.

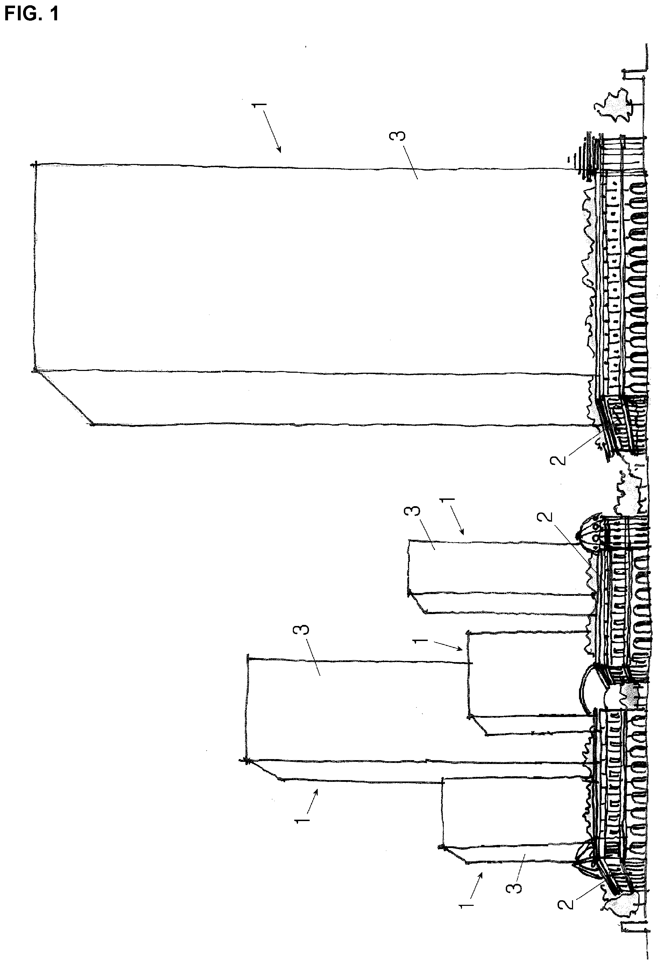

FIG. 1 shows a regional building group structure with an image of a city in England, specifically, a cityscape image of London, for instance, as the theme of lower floors 2 according to one embodiment of the present invention.

In a region where a characterized city is formed, three or more characterized buildings 1 that share a specific theme are arranged, wherein the lower floors 2 of each characterized building 1 are imparted with unity in the basic design and structural form pertaining to the appearance and decoration in accordance with the specific theme.

Referring to the embodiment shown in FIG. 1., it is assumed that, in terms of structure, the lower floors 2 are of robust structure such as reinforced concrete structure and steel-framed reinforced concrete structure, while being designed by adopting, into the basic design, an image of the appearance subjected to gorgeous brick-type decoration of English Victorian style, and also that the interior of the lower floors is of costly gorgeous structure, for instance.

The lower floors 2 shall be ranging from the first to the second or the third floors, for instance, or can also be partly only in a first-floor range, or, in regards to the individual characterized building, the floors to the extent of a fifth-floor range can be the lower floors having unity in the basic design in some cases.

Meanwhile, it is assumed that, as for a living space for a large number of residents and a space for economic activities, the upper floors 3 are of simple and highly costeffective structure with emphasis on cost and/or functionality and durability such as to compensate for a high cost required for the lower floors 2.

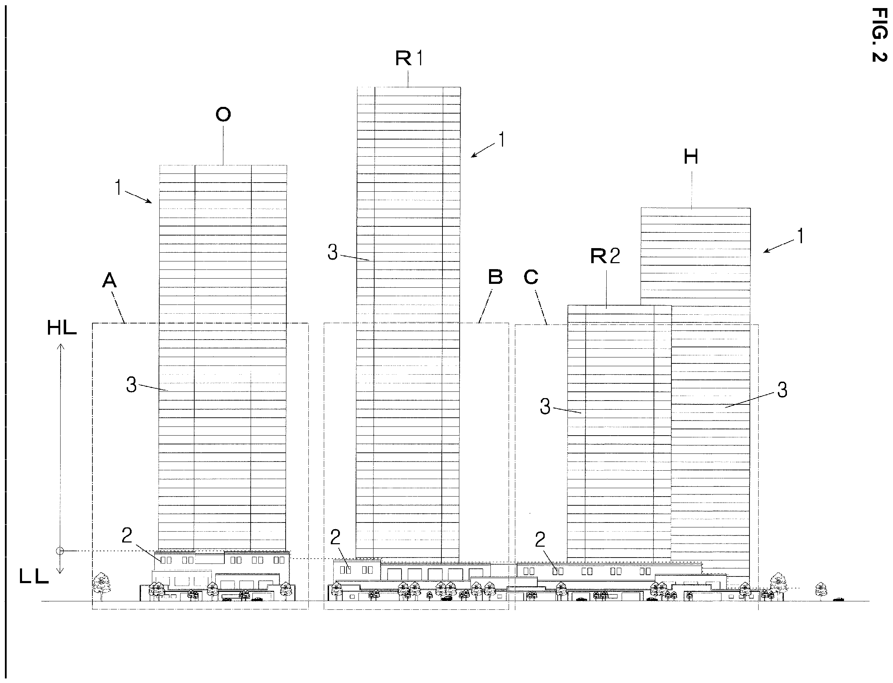

FIG. 2 schematically shows the regional building group structure of the present invention, wherein there is shown a building group made up of four characterized buildings 1, that is, two residences R1, R2, an office building O and a hotel H, all of which are provided with the lower floors that are imparted with unity in the basic design and structural form in accordance with the specific theme. In actuality, application to a building group made up of a larger number of buildings, specifically, five to ten or more buildings, for instance, is also possible.

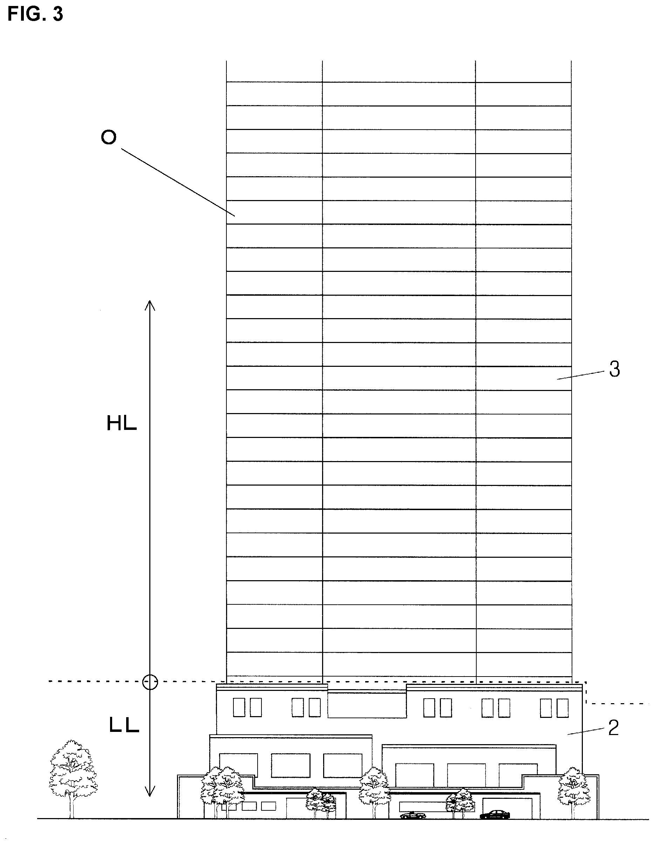

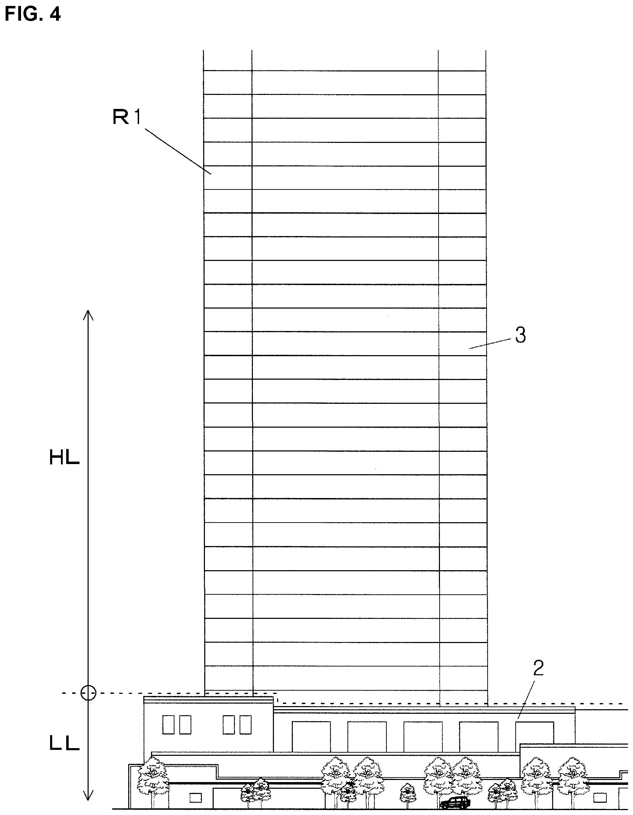

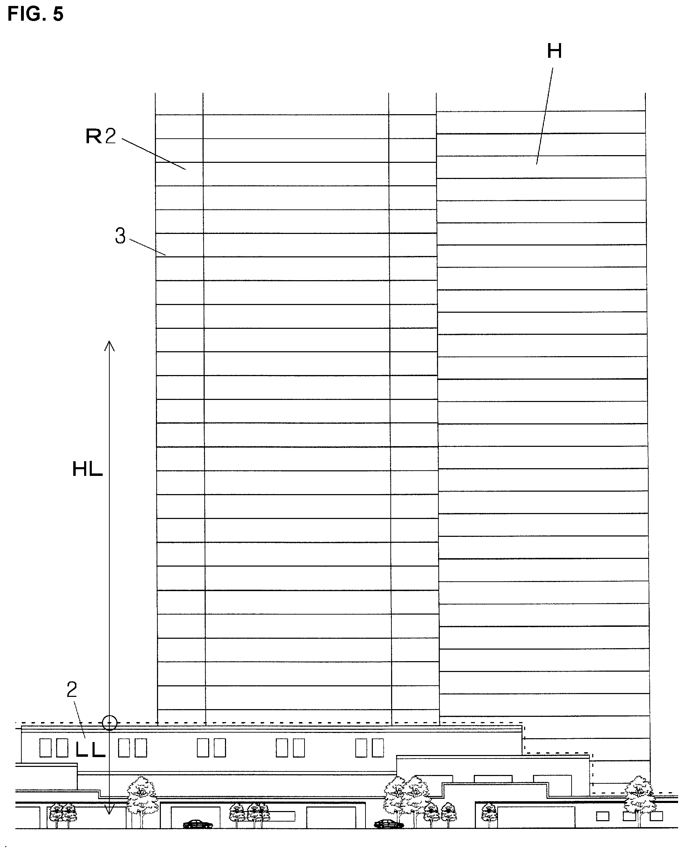

FIG. 3 is an enlarged-scale view of a portion indicated by A in FIG. 2, FIG. 4 is an enlarged-scale view of a portion indicated by B in FIG. 2, and FIG. 5 is an enlarged-scale view of a portion indicated by C in FIG. 2. According to the present invention, in regards to the overall building group made up of the plurality of buildings constructed in a certain region as part of city planning, these building are individually sectionalized, in unity, into the low-rise lower floors 2 and the upper floors 3 located there-above, wherein the lower floors shall be of structural form mainly based on concrete, while the upper floors 3 shall be of structural form mainly based on steel materials.

In regards to the aspect of an appearance, the lower floors LL have unity in the basic design and structural form so as to achieve a classic or traditional appearance with emphasis on artistic and decorative qualities, while the upper floors HL have unity in the basic design and structural form so as to achieve a simply contemporary or neo-futuristic appearance with emphasis on strength and durability, as illustrated, for instance.

To actualize an artistic sense that a building designer or owner wants, the lower floors LL make use of, as interior and exterior finishing materials thereof, a material or raw material with which an old-fashioned nostalgic and heart-warming or profoundly luxurious atmosphere can be created. For actualization of a highly-artistic and fascinating space, an expensive material shall be used to execute construction of the lower floors LL by careful works by skilled workers.

The lower floors LL based on free-thinking and classical theory, together with use of excellent material of this type, are configured so as to be higher by about several meters than the line of sight of the people walking down the street, in other words, in the range of floors from the first- to more or less the fifth floors, for instance, thereby allowing the people to relish the experience of living in the highly-artistic and fascinating city.

Meanwhile, the upper floors HL shall be of simple structure and appearance, provided that emphasis be placed on strength and durability included in a building program, and that a cost as for the appearance be minimized.

The concept is rooted in the idea that, in terms of the aspect of strength and durability, the upper floors HL are captured in a life span of 100 years, 500 years or 1000 years, wherein the equipment of high strength is used for the equipment included in the upper floors, and besides, a sufficiently large space is formed as an equipment installation space to facilitate repairing and replacement of the equipment.

Assuming that a building skeleton is able to last for 500 years when a general life span of the building skeleton is assumed to be 50 years, for instance, the basic cost relating to the building life span comes to be one tenth.

It is noted that the interior of the upper floors HL can also achieve high-grade interior finishing at the request of the resident of each dwelling unit.

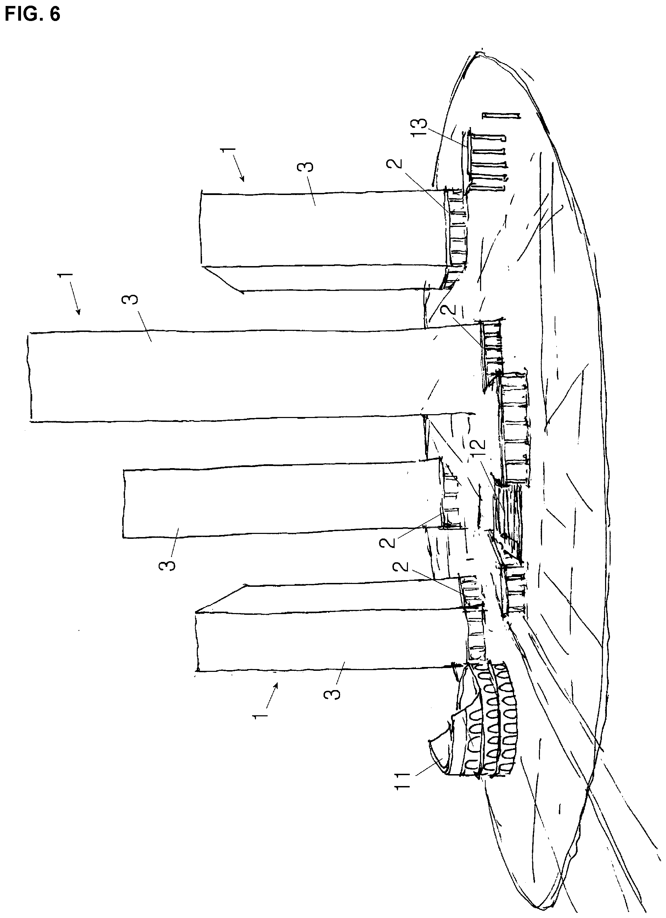

FIG. 6 shows the regional building group structure with an image of ancient ruins, specifically, a Roman ruin image, for instance, as the theme of lower floors according to another embodiment of the present invention.

In a region where a characterized city is formed, three or more characterized buildings 1 that share the specific theme, specifically, the Roman ruin image herein are arranged, wherein the lower floors 2 of each characterized building 1 are imparted with unity in the basic design and structural form pertaining to the appearance and decoration in accordance with the specific theme.

Referring to the embodiment shown in FIG. 6., it is assumed that, in terms of structure, the lower floors 2 are of robust structure such as reinforced concrete structure and steel-framed reinforced concrete structure, while being designed, in regards to the appearance thereof, by adopting an ancient Roman architectural style into the basic design, and also that the interior of the lower floors is of costly gorgeous structure given the Roman ruin image.

The lower floors 2 having unity in the basic design can be in a first-floor range having a great floor height or be partly ranging from the first to the second or the third floors, for instance.

Meanwhile, it is assumed that, as for a living space for a large number of residents and a space for economic activities, the upper floors 3 are of simple and highly costeffective structure with emphasis on the cost and/or functionality and durability such as to compensate for a high cost required for the lower floors 2.

Further, a cityscape image as the characterized city can be enhanced in such a way as to separately build, in the region, monuments 11, 12, 13 that are designed to imitate the tourist attractions of Roman ruins such as Colosseum, Spanish Square and Roman Forum, for instance.

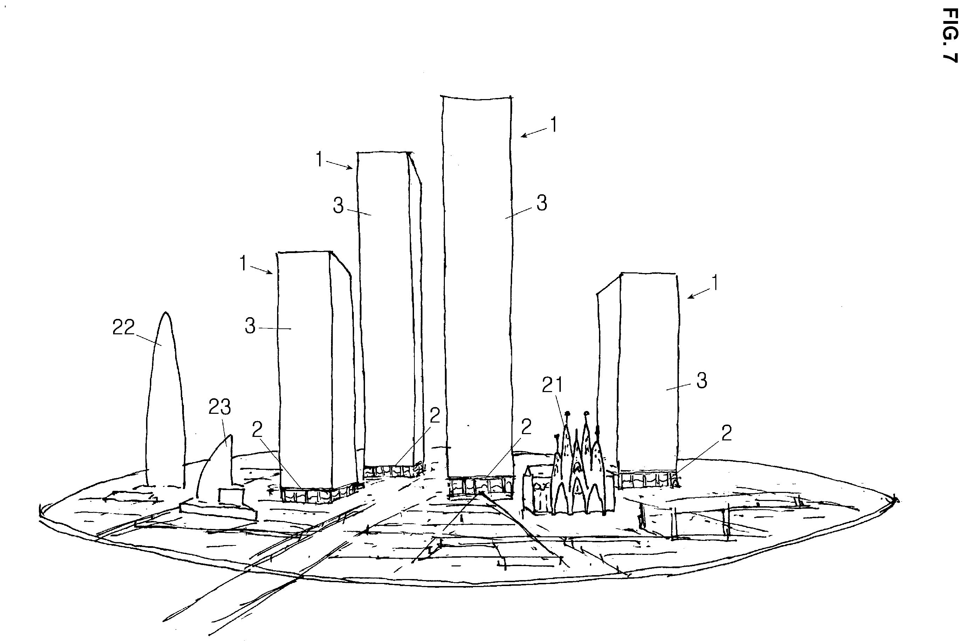

FIG. 7 shows the regional building group structure with an image of a city in Spain, specifically, a cityscape image of Barcelona, for instance, as the theme of lower floors according to a further embodiment of the present invention.

In a region where a characterized city is formed, three or more characterized buildings 1 that share the specific theme, specifically, the image of the city in Spain herein are arranged, wherein the lower floors 2 of each characterized building 1 are imparted with unity in the basic design and structural form pertaining to the appearance and decoration in accordance with the specific theme.

Referring to the embodiment shown in FIG. 7, it is assumed that, in terms of structure, the lower floors 2 are of robust structure such as reinforced concrete structure and steel-framed reinforced concrete structure, while being designed by adopting, into the basic design, an image of the appearance of buildings having been built during the period from the nineteenth century to the beginning of the twentieth century by Antoni Gaudi or like famous architects in Barcelona, for instance, and also that the interior of the lower floors are of costly structure.

The lower floors 2 shall be ranging from the first to the second or the third floors, for instance, or can be partly only in a first-floor range, or, in regards to the individual characterized building, the floors to the extent of a fifth-floor range can be the lower floors having unity in the basic design in some cases.

Meanwhile, it is assumed that, as for a living space for a large number of residents and a space for economic activities, the upper floors 3 are of simple and highly costeffective structure with emphasis on cost and/or functionality and durability such as to compensate for a high cost required for the lower floors 2.

Further, a cityscape image as the characterized city can be enhanced in such a way as to separately build, in the region, monuments 21, 22, 23 that are designed to imitate Sagrada Familia, Torre Agbar and other famous buildings, for instance.

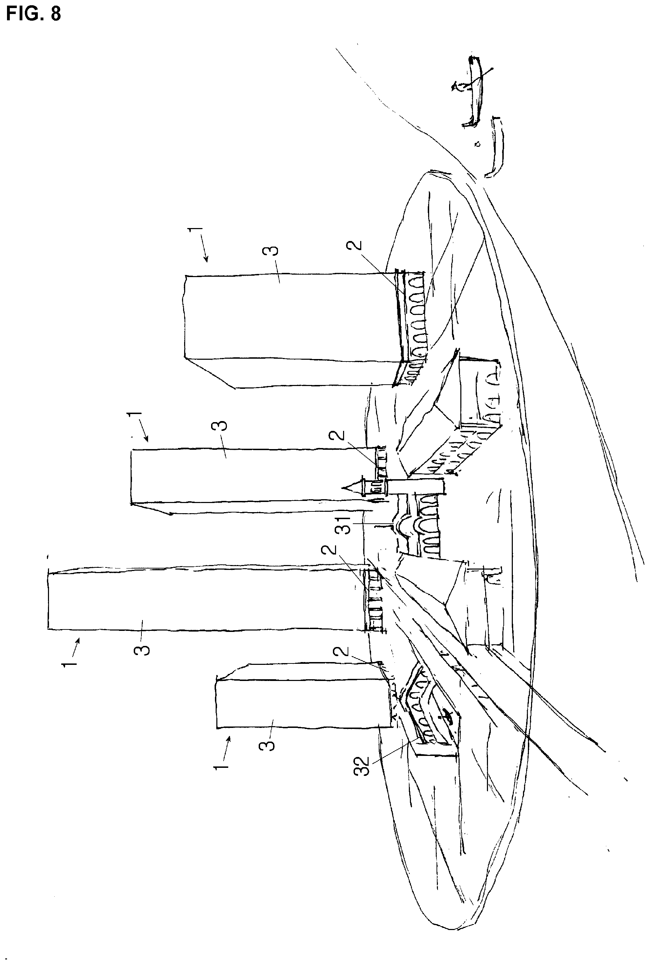

FIG. 8 shows the regional building group structure with an image of a city on water, specifically, a cityscape image of Venezia, for instance, as the theme of lower floors according to a still further embodiment of the present invention.

In a region where a characterized city is formed, three or more characterized buildings 1 that share the specific theme, specifically, an image of the buildings in the city on water like Venezia herein are arranged, wherein the lower floors 2 of each characterized building 1 are imparted with unity in the basic design and structural form pertaining to the appearance and decoration in accordance with the specific theme.

Referring to the embodiment shown in FIG. 8., it is assumed that, in terms of structure, the lower floors 2 are of robust structure such as reinforced concrete structure and steel-framed reinforced concrete structure, while being designed by adopting an image of corridor and/or Gothicstyle continuous arc and decoration of Islamic architecture into the basic design, and also that the interior of the lower floors are of costly structure.

The lower floors 2 shall be ranging from the first to the second or the third floors, for instance, or can be partly only in a first-floor range, or, in regards to the individual characterized building, the floors to the extent of a fifth-floor range can be the lower floors having unity in the basic design in some cases.

Meanwhile, it is assumed that, as for a living space for a large number of residents and a space for economic activities, the upper floors 3 are of simple and high costeffective structure with emphasis on cost and/or functionality and durability such as to compensate for a high cost required for the lower floors 2.

Further, a cityscape image as the characterized city can be enhanced in such a way as to separately build, in the region, monuments 31, 32 that are designed to imitate Caffe Florian in Piazza San Marco, Ponte di Rialto and canal, for instance.

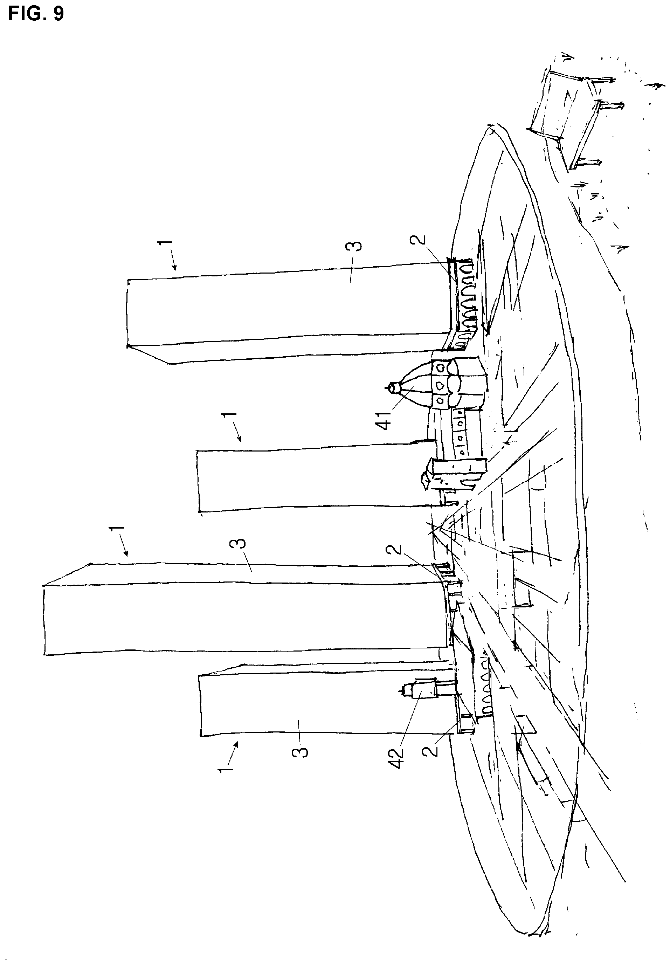

FIG. 9 shows the regional building group structure with an image of a city in Italy, specifically, a cityscape image of Firenze, for instance, as theme of lower floors according to a yet further embodiment of the present invention.

In a region where a characterized city is formed, three or more characterized buildings 1 that share the specific theme, specifically, an image of architecture and/or decoration seen in the cityscape of Firenze herein are arranged, wherein the lower floors 2 of each characterized building 1 are imparted with unity in the basic design and structural form pertaining to the appearance and decoration in accordance with the specific theme.

Referring to the embodiment shown in FIG. 9, it is assumed that, in terms of structure, the lower floors 2 are of robust structure such as reinforced concrete structure and steel-framed reinforced concrete structure, while being designed by adopting an early Renaissance architectural style and/or decoration into the basic design, and also that the interior of the lower floors is of costly structure.

The lower floors 2 shall be ranging from the first to the second or the third floors, for instance, or can be partly only in a first-floor range, or, in regards to the individual characterized building, the floors to the extent of a fifth-floor range can be the lower floors having unity in the basic design in some cases.

Meanwhile, it is assumed that, as for a living space for a large number of residents and a space for economic activities, the upper floors 3 are of simple and highly costeffective structure with emphasis on cost and/or functionality and durability such as to compensate for a high cost required for the lower floors 2.

Further, a cityscape image as the characterized city can be enhanced in such a way as to separately build, in the region, monuments 41, 42 that are designed to imitate Cathedral of Santa Maria del Fiore and Palazzo Vecchio, for instance.

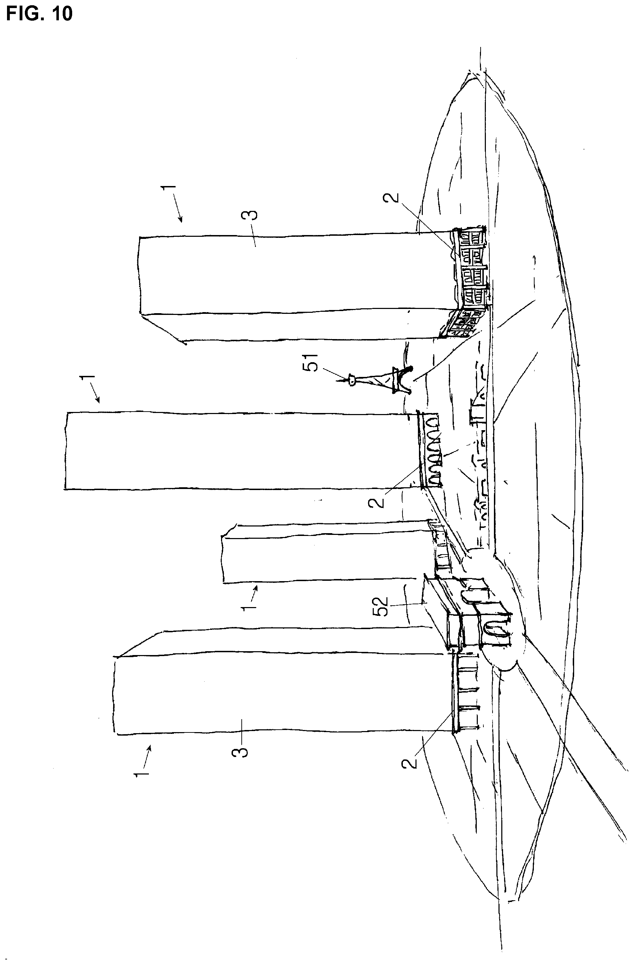

FIG. 10 shows the regional building group structure with an image of a city in France, specifically, a cityscape image of Paris, for instance, as theme of lower floors according to a yet further embodiment of the present invention.

In a region where a characterized city is formed, three or more characterized buildings 1 that share the specific theme, specifically, an image of architecture and/or decoration seen in the cityscape of Paris herein are arranged, wherein the lower floors 2 of each characterized building 1 are imparted with unity in the basic design and structural form pertaining to the appearance and decoration in accordance with the specific theme.

Referring to the embodiment shown in FIG. 10, it is assumed that, in terms of structure, the lower floors 2 are of robust structure such as reinforced concrete structure and steel-framed reinforced concrete structure, while being designed by adopting an image of highly-decorative and elegant cityscape of Art Nouveau or Ottoman style into the basic design, and also that the interior of the lower floors is of costly structure.

The lower floors 2 shall be ranging from the first to the second or the third floors, for instance, or can be partly only in a first-floor range, or, in regards to the individual characterized building, the floors to the extent of a fifth-floor range can be the lower floors having unity in the basic design in some cases.

Meanwhile, it is assumed that, as for a living space for a large number of residents and a space for economic activities, the upper floors 3 are of simple and highly costeffective structure with emphasis on cost and/or functionality and durability such as to compensate for a high cost required for the lower floors 2.

Further, a cityscape image as the characterized city can be enhanced in such a way as to separately build, in the region, monuments 51, 52 that are designed to imitate Eiffel Tower and Arc de Triomphe, for instance.

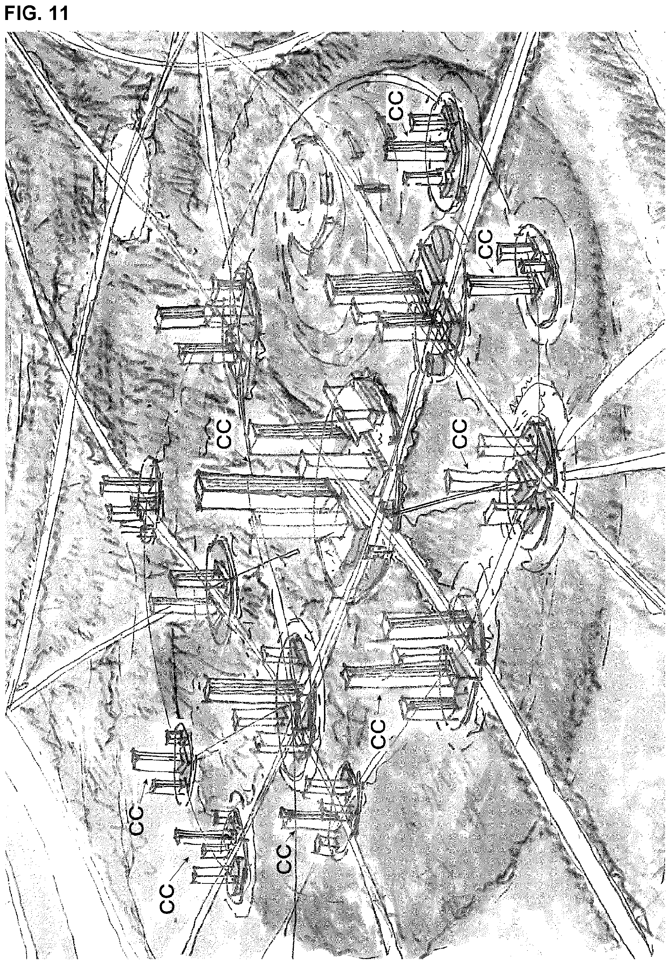

FIG. 11 conceptionally shows a characterized city group structure made up of a plurality of dispersedly located characterized cities in the present invention.

In accordance with the specific theme, each characterized city CC is made up of a group of characterized buildings that share the specific theme. For instance, the regional building group structures shown in FIGS. 1 and 6 to 10 are respectively considered as constituting a single characterized city CC, wherein the plurality of dispersedly located city regions, specifically, the plurality of dispersedly located characterized cities CC can constitute a characterized city group structure given the specific theme different at each characterized city CC.

A large number of characterized cities CC respectively constructed in accordance with the different themes are situated in the characterized city group of this type, thereby allowing the residents to live a daily life based on the characterized city CC according to one's preference or to visit to the other characterized cities respectively given the different themes, for the purpose of sightseeing, for instance.

### EXPLANATION OF REFERENCE NUMERALS

1 ... Characterized building, 2 ... Lower floor, 3 ... Upper floor, 11, 12, 21, 22, 23, 31, 32, 41, 42, 51, 52 ... Monument,
CC ... Characterized city,
LL ... Lower floor, HL ... Upper floor,
R1, R2 ... Residence, O ... Office building, H ... Hotel

## Claims

1. A regional building group structure in which three or more characterized buildings that share a specific theme are arranged in a region, the regional building group structure being **characterized in that** said characterized buildings are individually provided with lower floors having unity in the basic design and structural form pertaining to appearance and decoration and upper floors located above said lower floors, wherein the lower floors of said characterized buildings arranged in one region are also imparted with unity in the basic design and structural form pertaining to appearance and decoration.

2. The regional building group structure according to claim 1, wherein the number of characterized buildings constituting the single building group is ranging from four to ten.

3. The regional building group structure according to claim 1, wherein the number of characterized buildings constituting the single building group is eleven or more.

4. The regional building group structure according to claim 1, wherein said specific theme is any one of (a) a theme based on an image of a famous city in ancient, modern or contemporary times, (b) a theme based on an image of a neo-futuristic city and (c) a theme based on an image of the contents of literature, fairy tale or folk story.

5. The regional building group structure according to claim 1, wherein said lower floors are ranging from at least the first- to the fifth floors.

6. The regional building group structure according to claim 1, wherein said upper floors are constructed integrally on said lower floors.

7. The regional building group structure according to claim 6, wherein said lower floors are of structure mainly comprising a reinforced concrete structure or a steel-framed reinforced concrete structure, while said upper floors are of structure mainly comprising a steel-framed structure.

8. The regional building group structure according to claim 1, wherein an inside lower floor whose outer periphery is enclosed with said lower floors is constructed integrally beneath said upper floors.

9. The regional building group structure according to claim 8, wherein said lower floors are of structure mainly comprising a reinforced concrete structure or a steel-framed reinforced concrete structure, while said upper floors and said inside lower floor are of structure mainly comprising a steel-framed structure.

10. A characterized city group structure **characterized in that** a plurality of dispersedly located city regions are respectively given the specific themes different at each city region, and in regards to each of the city regions, three or more characterized buildings that share the specific theme are arranged in each city region, wherein said characterized buildings are individually provided with lower floors ranging from at least the first to the fifth floors and having unity in the basic design and structural form pertaining to appearance and decoration, and upper floors located above said lower floors, and wherein the lower floors of said characterized buildings arranged in each city region are also imparted with unity in the basic design and structural form pertaining to appearance and decoration.

11. The characterized city group structure according to claim 10, wherein the specific theme different at said each city region is any one of (a) a theme based on an image of a famous city in antient, modern or contemporary times, (b) a theme based on an image of a neo-futuristic city and (c) a theme based on an image of the contents of literature, fairy tale or folk story.
